# EUROPEAN PATENT SPECIFICATION

(11) **EP 0 568 118 B1**
(45) Date of publication and mention of the grant of the patent: **12.02.1997**
(21) Application number: 93111362.5
(22) Date of filing: 03.08.1990
(51) Int. Cl.: C01B 3/00, C01B 4/00, G21B 1/00

(54) **Process for storing hydrogen, apparatus and method for generating heat energy, using the process**
Verfahren zum Speichern von Wasserstoff, Apparat und Methode zum Erzeugen von Wärmeenergie mittels dieses Verfahrens
Procédé de stockage d'hydrogène, appareil et methode de production d'énergie calorifique utilisant le procédé

(30) Priority: 04.08.1989 JP 203035/89; 03.08.1990 JP 206997/90
(43) Date of publication of application: 03.11.1993
(62) Divisional of application: 90308602.3
(73) Proprietor: CANON KABUSHIKI KAISHA, Tokyo (JP)
(72) Inventor: Hasegawa, Mitsutoshi, c/o Canon Kabushiki Kaisha, Ohta-ku, Tokyo (JP); Hosono, Nagao, c/o Canon Kabushiki Kaisha, Ohta-ku, Tokyo (JP)
(74) Representative: Beresford, Keith Denis Lewis

(56) References cited:
- FUSION TECHNOLOGY vol. 16, no. 2 , September 1989 , LA GRANGE PARK, ILLI, US pages 251 - 253 D. N. RUZIC ET AL. 'A NOVEL APPARATUS TO INVESTIGATE THE POSSIBILITY OF PLASMA-ASSISTED COLD FUSION'

## Description

The present invention relates to an apparatus and method for storing hydrogen in a hydrogen storage member, such as for hydrogen purification-recovery, heat pumps, hydrogen storage containers, actuators, etc.

The present invention also relates to a method for generating energy which is capable of obtaining heat energy at a higher level than that of input energy, utilizing the above method for storing hydrogen.

It has been contemplated to switch energy supply sources from fossil fuels such as petroleum, etc. to such energy supply sources as atomic energy, solar energy, etc., or furthermore to energy supply sources such as fast breeding, nuclear fusion reaction, etc. In order to effectively and conveniently utilize these new energy sources, it has been contemplated to utilize hydrogen as a secondary energy source, because the raw material is water, hydrogen has less environmental pollution and broad application fields, and also because hydrogen serves as an energy storage means and can transport the energy. Now, the transportation and storage of hydrogen are carried out in the form of a compressed gas or liquid hydrogen, but are not always an effective method for transporting and storing the hydrogen, when viewed from safety, transportation-storage efficiency and economy.

Recently, attention has been paid to hydrogen storage materials in the process for storing hydrogen, because of their capabilities of storing hydrogen at a density equal to, or higher than that of liquid hydrogen.

Processes so far proposed for storing hydrogen in hydrogen storage material such as hydrogen storage metals, etc. include a process which comprises filling a vessel containing a hydrogen storage member with a hydrogen gas under a few to a few tens of atmospheres to make a hydrogen storing by utilizing the solid solution equilibrium state of a metal hydride composed of a binary system of metal and hydrogen under a high pressure.

This process utilizes such phenomena that the hydrogen content in the hydrogen storage member is dependent on the hydrogen gas pressure in the vessel and the temperature of the hydrogen storage material, and in case that the hydrogen storage material is composed of a metal or an alloy, the hydrogen content in the hydrogen storage member suddenly increases with higher pressure of the hydrogen gas and lower temperature of the hydrogen storage member.

Recently, it has been suggested that a cold nuclear fusion reaction (D-D reaction) can be carried out by electrolysing a heavy water solution containing metal ions with a simple metal of Pd or Ti as a cathode. For example, in S. E. Jones et al, Nature 338 (1989) 737, "Observation of Cold Nuclear Fusion in Condensed Matter", neutrons of 2.5 MuV were detected during the electrolysis by measurement with a highly sensitive detector, proving that the nuclear fusion reaction took place to a very slight degree, though, by the generation of neutrons. A similar experiment was reported by Martin Fleischman & Stanley Pons in J. Electroanal. Chem, 261 (1989), 301-308, and the hydrogen storage member and a process for storing hydrogen have attracted keen attention again.

Conventional processes for occluding hydrogen have a problem of vessel explosion, because a vessel containing a hydrogen storage member is exposed to a high pressure when hydrogen is occluded in the hydrogen storage member.

Where hydrogen storage is carried out by electrolysis of an electrolytic solution, bubbles of deuterium D₂ are attached to the surface of Pd and Ti as a cathode in the process of electrolysis, because a heavy water solution containing metallic ions is used as an electrolytic solution. Thus, it is difficult to keep the state of the cathode surface constantly uniform, failing to carry out hydrogen storage effectively. Furthermore deuterium is generated at the cathode and oxygen is generated at the anode, and thus generated deuterium and oxygen react with each other causing explosion. Furthermore, because of the rise in solution temperature due to joule heat generated from the electrolytic solution working as a resistor or an increase in the amount of gas discharged from the electrode, it is impossible to elevate the voltage to be applied to the electrode, or difficult to cool the hydrogen storing member.

The heat energy available by the conventional method for generating the heat energy is not so much as to allow a practical application. The electric current passing through the electrolytic solution is comparatively large, for example, up to about 500 mA/cm² per electrode surface area, but the voltage applied thereto is low, for example, about 1 to about 30 volts. The voltage cannot be made higher, because the electrical resistance of the electrolytic solution is low. Thus, even if deuterium is occluded in the negative electrode constituted by the hydrogen storage member, heat generation does not take place with a sufficiently high probability.

In the prior art, nuclear fusion is carried out by inserting Ti rod as a hydrogen storage member into a deuterium gas there are disadvantages that a low temperature such as -150°C is required for storing much deuterium in the hydrogen storage member, and also a complicated apparatus is required for that purpose.

An object of the present invention is to provide a method of storing hydrogen, which makes it possible to efficiently store hydrogen in a hydrogen storage material at a high content without bringing the hydrogen storage member to a low temperature even under a relatively low gas pressure such as a few atmospheres as well as under a high gas pressure, thereby overcoming the above-mentioned disadvantages of the prior art.

Another object of the present invention is to provide an apparatus for efficiently storing hydrogen in a hydrogen storage member at a high concentration and stably.

A further object of the present invention is to provide a method capable of generating as much heat energy as possible with a very small amount of electric power.

In the present invention, the term "hydrogen" designates light hydrogen, deuterium, tritium and their gas mixture, unless otherwise specially mentioned.

The present invention is defined in the appended claims:

In the present invention, hydrogen is stored in a hydrogen storage member by placing the hydrogen storage member in a hydrogen gas atmosphere and generating a discharge in the hydrogen gas atmosphere.

In the present apparatus, heat generation is carried out by placing the hydrogen storage member in a deuterium gas atmosphere, and generating a discharge in the deuterium gas atmosphere, while applying a voltage to the hydrogen storage member so that the hydrogen storage member can have a minus voltage phase, thereby occluding deuterium in the hydrogen storage material.

As explained above, hydrogen storage in the hydrogen storage member can be efficiently carried out by carrying out a discharge between the electrodes without any reaction process in a solution.

The activation mechanism of hydrogen, and metals or alloys as hydrogen storage materials has been extensively investigated, but has not been clarified fully yet. In general, it is presumed that hydrogen forms hydrides with metals or alloys mainly through the following basic reaction steps:
(1) Physical adsorption of hydrogen molecules onto the alloy surface,
(2) Dissociation of hydrogen molecules and chemical adsorption of atomic-stated hydrogen,
(3) Permeation of hydrogen atoms through the surface layers (i.e permeation of hydrogen atoms through the film formed on the metal or alloy surface and through the hydride layer already formed thereon),
(4) Diffusion and dissolution of hydrogen atoms into metals and alloys, and
(5) Precipitation of hydrides from a saturated hydrogen solid solution, etc.

In case of hydrogen storage by electrolysis of a heavy water solution, attachment of bubbles of deuterium to the negative electrode surface, etc. take place in these steps, inhibiting further adsorption of hydrogen molecules to the alloy surface, etc., but in the embodiments of the present invention, no reaction is carried out in a solution and thus the surface of the hydrogen storage member is not influenced by the bubbles. That is, the storage of hydrogen can be effectively carried out.

Furthermore, no oxygen is generated at the positive electrode even by discharging, and thus there is no danger of explosion by reaction between oxygen and deuterium. Still furthermore, hydrogen gas is a good insulator (as is well known), and thus a high voltage can be applied between the electrodes. That is, it is easy to ionize or radicalize the hydrogen, and it is possible to accelerate the excited and charged hydrogen toward the negative electrodes to hit the hydrogen storage member. Heating phenomenon can be efficiently occasioned, because the excited and charged hydrogen can be accelerated much more in the gas phase than in the liquid phase. In the present invention, a partial discharge is generated between the two electrodes to activate the hydrogen, thereby forming hydrogen ions and hydrogen radicals. As hydrogen ions and hydrogen radicals have an improved adsorption probability on the surface of hydrogen storage member, as compared with the hydrogen molecules and thus occlusion hydrogen into the hydrogen storage member is promoted to increase the hydrogen content in the hydrogen storage member.

In case that a voltage is applied to the hydrogen storage member, ionized and charged hydrogen can be collected and accelerated, thereby intruding hydrogen into the hydrogen storage member. Thus, hydrogen storage can be carried out more effectively and heat generation can be enhanced.

In the present invention, a cooling means can be used in contact with the hydrogen storage member when hydrogen storage is carried out, and thus it is possible to reduce heat release of the hydrogen storage member due to hydrogen storage and much hydrogen can be stored efficiently.

In the accompanying drawings:
Fig. 1 is a schematic view showing an apparatus for storing hydrogen according to the present invention;
Fig. 2 is a schematic view showing an apparatus according to a first embodiment of the present invention;
Fig. 3 is a schematic view showing an apparatus according to second and third embodiments of the present invention; and
Fig. 4 is a schematic view showing an apparatus according to fourth, fifth and sixth embodiments of the present invention.

The present process for storing hydrogen into a hydrogen storage member will be outlined below, referring to the drawings.

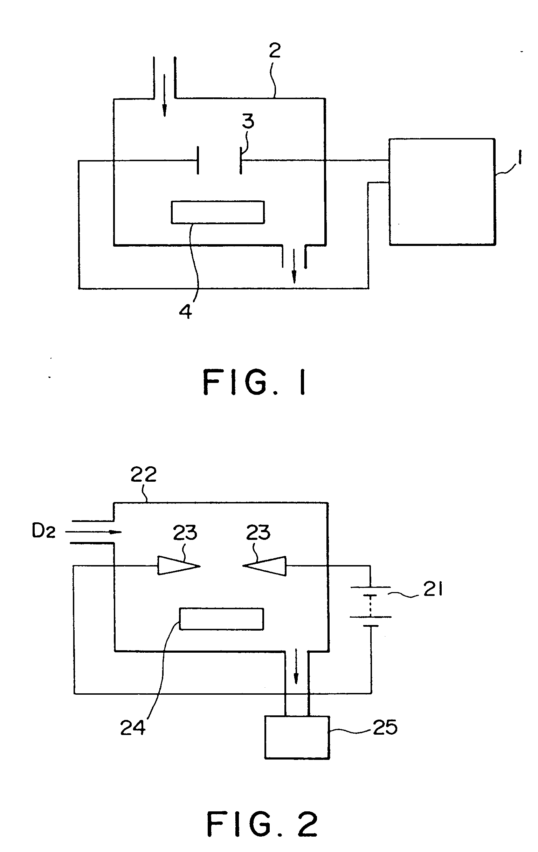

Fig. 1 is a schematic view showing an apparatus for carrying out hydrogen storage according to the present invention. Partial discharge is generated by a power source 1 between the electrodes 3 in a vessel 2 in a hydrogen gas atmosphere to activate the hydrogen, thereby forming hydrogen ions or hydrogen radicals. The hydrogen ions or hydrogen radicals have an improved adsorption probability on the surface of hydrogen storage member 4, as compared with neutral hydrogen molecules, and thus the storage of hydrogen in the hydrogen storage member 4 such as a hydrogen storage alloy is accelerated, thereby increasing the hydrogen content in the hydrogen storage member 4.

Though the amount of hydrogen stored in the hydrogen storage material depends upon the species of hydrogen storage materials, hydrogen is occluded in a volume 700 to 1,000 times as large as that of the hydrogen storage material. This proportion corresponds approximately to a volume reduction when a hydrogen gas is liquefied.

As the hydrogen storage material constituting a hydrogen storage member, simple metals such as Pd, Ca, Mg, Ti, Zr, V, Nb, Fe, etc, and alloys containing at least one of these metals can be used. Examples of alloys include Mg-based alloys such as Mg₂Cu, Mg₂Ni, etc., Ti-based alloys such as TiFe, TiCo, TiMn, TiCr₂, etc. and Zr-based alloys such as ZrMn₂, etc. Furthermore, rare earth element alloys containing at least one of the rare earth elements represented by La, Mm (misch metal), etc. can be used as the allows. For example, La-Ni-based alloys such as LaNi₅, etc., and Mm-Ni-based alloys such as CaMmNiAℓ, etc. can be used.

The hydrogen storage member can have any appropriate shape such as a sheet form, a rod form a spherical form, a plate form, etc., and the shape is not limited to these forms. That is, any shape can be used, so long as it has a surface area large enough to efficiently carry out hydrogen storage. In order to allow hydrogen atoms to efficiently intrude into the hydrogen storage member to a sufficient depth, the entirety of the electrode constituted by the hydrogen storage member or its surface may be formed from fine particles of hydrogen storage materials as a layer by deposition according to a CVD process, etc.

The gas for use in the present invention includes gases containing light hydrogen, deuterium and tritium, and in case of carrying out heat generation, a deuterium gas, which may contain a very small amount of light hydrogen and/or tritium, is used, whereas otherwise light hydrogen is used and in the latter case a mixed gas with a rare gas such as Ar, etc. may be used.

As the pressure of the gas atmosphere, a high pressure is not particularly necessary. That is, a pressure such as the atmospheric pressure can be used. In other words, any pressure, under which the discharge can be effectively generated, can be used.

When the surface of the hydrogen storage member is subjected to sputtering and the like at least once in a hydrogen atmosphere before the storage of hydrogen into the hydrogen storing member, thereby removing the adsorbed materials from the surface and damaging regions near the surface at the same time to induce occurrence of defects, hydrogen storage can be more effectively carried out. This is because, if there are defects on the surface of the hydrogen storage member, the surface area is increased and the adsorption probability is enhanced thereby.

The present invention will be explained in more detail below, referring to Examples.

### Example 1

Fig. 2 shows one embodiment of storing deuterium (D₂) in palladium according to the present invention.

Pd 24 as a sheet-form hydrogen storage member was placed in a vacuum chamber 22 and then deuterium (D₂) was introduced into the vacuum chamber 22 to make substantially one atmosphere. An arc discharge was generated between brass electrodes 23 from a power source 21 in that atmosphere for 60 minutes to generate deuterium radicals, deuterium ions, etc, thereby activating the deuterium gas.

Adsorption on the surface of Pd 24 was promoted and deuterium was stored in Pd 24 thereby.

By evacuating the inside of the vacuum chamber 22 by a vacuum pump 25 to remove light hydrogen or impurities such as moisture, etc. adsorbed on the hydrogen storage member before the storage of deuterium, the storage of deuterium the hydrogen storage member can be effectively carried out.

Then, the thus obtained hydrogen storage member was placed in a vacuum tank (not shown in the drawing) and the vacuum tank was evacuated to 3 x 10⁻⁵ - 5 x 10⁻⁵ Torr. Then, the hydrogen storage member was heated to 400°C by a halogen heater, and the amount of deuterium discharged from the hydrogen storage member was measured by a differential pumping-type, quadripole analyzer (not shown in the drawing). As to the deuterium, peak of deuterium molecule ion at m/e = 4 was measured. Integrated ion peak value for 3 hours from the start of heating was obtained at a time constant of 1 sec. It was found that the deuterium content of the hydrogen storing member was increased by about 3 %, when compared with the integrated ion peak value of a hydrogen storage member without the arc discharge as a comparative example.

### Example 2

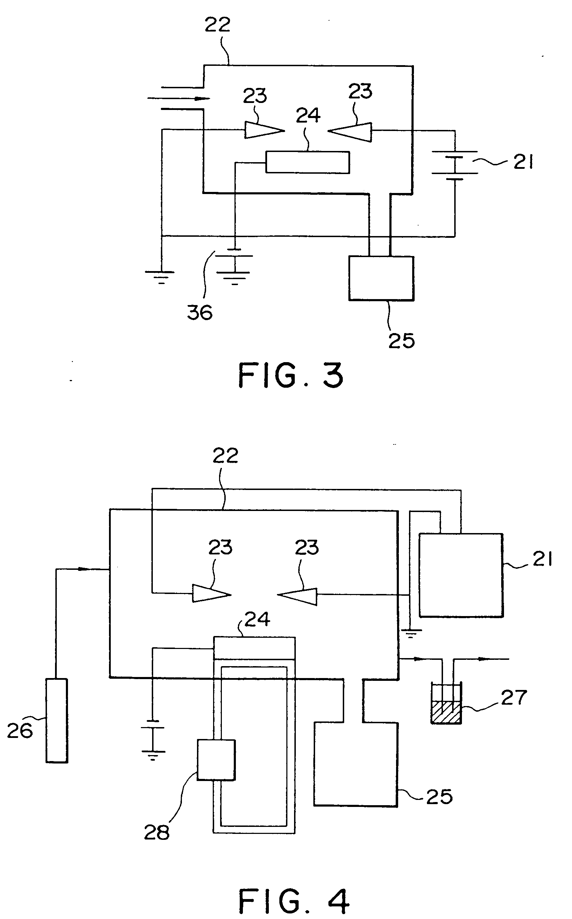

A case of applying a minus voltage to Pd 24 as a hydrogen storage member while other conditions were the same as in Example 1 is given below. In Fig. 3, the same members as in Fig. 2 are identified with the same reference numbers as in Fig. 2.

By applying a voltage of minus 100 V to Pd 24 from a power source 36, the deuterium ions generated between the electrodes 23 with a power source 21 were intensively guided onto the surface of Pd 24 to occlude the deuterium into Pd 24 for 60 minutes.

The deuterium content of the hydrogen storage member was measured in the same manner as in Example 1 and compared with that of Example 1. It was found that the deuterium content was increased by 20 %. That is, the effect of applying a minus voltage to the heat storage member was recognized.

In Examples 1 and 2, the deuterium content was further increased by elevating the deuterium gas pressure and prolonging the arc discharge time.

In Examples 1 and 2, description was made of storing deuterium in the hydrogen storage member, but similar effects were obtained using light hydrogen. Needless to say, similar effects also can be obtained in case of storing hydrogen in the hydrogen storage member in a mixed gas atmosphere of a rare gas of Ar, etc. with hydrogen.

In Examples 1 and 2, arc discharge was used. When hydrogen is stored in a glow discharge state or when a partial discharge incapable of forming a discharge route between the electrodes is carried out, similar effects were obtained.

It was found that the higher the voltage was in the voltage region capable of generating a partial discharge, the more excited the hydrogen atoms were and thus the hydrogen storage content was increased more.

### Example 3

A case of applying a surface treatment to Pd 24 as a hydrogen storage member before hydrogen storage will be given below.

Before hydrogen was stored in the hydrogen storage member, the surface of hydrogen storage member Pd 24 was sputtered in a hydrogen atmosphere plasm to remove the adsorbed materials from the surface and also damage the surface or regions near the surface at the same time, thereby causing defects.

The thus surface-treated hydrogen storage member was placed in a chamber as shown in Fig. 3 and subjected to hydrogen storage in the same manner as in Example 2.

Then, the deuterium content was measured in the same manner as in Example 1 and compared with that of Example 2. It was found that the deuterium content was obviously increased over that of Example 2.

In this Example, the surface treatment of the hydrogen storage member was exemplified. The deuterium content was increased also in case of forming the surface or the entirety of the hydrogen storage member by depositing fine particles of the storage member.

Now, an apparatus for generating heat using a deuterium-storing hydrogen storage member will be explained below.

### Example 4

Fig. 4 shows a schematic view of an apparatus used in this Example, where the same members as in Fig. 3 are identified by the same reference numerals as used in Fig. 3.

The inside of vacuum chamber 22 in which a hydrogen storage member Pd 24 was placed was evacuated to 1.3 x 10⁻³ Pa (1 x 10⁻⁵ Torr) or lower by a vacuum pump 25, and then deuterium gas was introduced into the vacuum chamber 22 from a deuterium cylinder 26 at a flow rate of 10 sccm through a mass flow controller.

Then, the inside of vacuum chamber 22 was placed in a deuterium atmosphere and the deuterium pressure was adjusted to about 1 atmosphere by a bubbler 27. In that state, a voltage was applied between electrodes 23 in the vacuum chamber 22 from a DC voltage source 21. By the voltage application an arc discharge was generated between the electrodes 23 to generate deuterium ions and deuterium radicals. Furthermore, a voltage of minus 100 V was applied to palladium (Pd) 24 being cooled by circulation of cooling water at 5°C through a cooler 28 while conducting the arc discharge and deuterium was continuously stored into Pd 24 while guiding the deuterium ions to the surface of Pd 24 to make its adsorption.

After storage of deuterium in the hydrogen storage member for 60 minutes, the deuterium content was measured in the same manner as in Example 1, and it was found that the deuterium content was obviously increased, as compared with that of Example 2 without cooling of the hydrogen storage member.

Storage of deuterium was carried out in the same manner as above and γ-rays were measured around the vacuum chamber 22 during the storage of deuterium. About 10-fold emission of γ-rays was detected against the background about 120 hours after the start of storage, and thus it was considered possible that a cold nuclear fusion (D-D reaction) had taken place in Pd 24. The measurement of emitted γ-rays was made according to the procedure for measuring ventrous and γ-rays, disclosed by S. E. Jones in Nature, Vol. 338, 27, April, 1989, 737-as a reference. In this Example, a liquid scintillator was provided around the apparatus to detect emission of γ-rays.

### Example 5

In the same apparatus in the same manner as in Example 4, voltages of minus 5 V and minus 500 V were applied to Pd 24 each for about 2.5 minutes repeatedly in cycles.

By repeatedly applying the voltages of minus 5 V and minus 500 V in cycles of about 5 minutes for about 50 hours, about 20-fold emission of γ-rays was detected against the γ-rays detection background.

### Example 6

By changing the cycle time of applying the voltages in Example 5 to 10 hours, 5 to 10-fold emission of γ-rays was detected at every change of the voltage from 5 V to 500 V, as compared with the emission at the applied voltage of 5 V.

In Examples 4, 5 and 6, deuterium gas was used, but a mixed gas of deuterium gas with a rare gas such as Ar, etc. is also effective. In these Examples, cooling water at 5°C was used, but cooling water at a temperature other than 5°C can be used. Similar effects can be obtained by cooling with liquefied nitrogen, liquefied helium, a low temperature gas, etc.

The hydrogen storage member used in Examples 4, 5 and 6 was in a sheet form, but is not limited thereto. A spherical form, a rod form, or other form can be used. It is preferable to make the hydrogen storage member into such a shape as to efficiently carry out cooling of the hydrogen storage member through a substrate holder adapted for conducting cooling.

Still furthermore, the arc discharge was carried out under a pressure of 1 atmosphere in the ambient of Examples 4, 5 and 6, but arc discharge or partial discharge under other pressure is also effective.

As explained above, hydrogen can be efficiently stored in a hydrogen storage member at a high concentration by placing the hydrogen storage member in a hydrogen gas ambient and generating a discharge in the hydrogen gas ambient under a relatively low gas pressure from approximately atmospheric pressure to a few atmospheres as well as under a high gas pressure without using a low temperature.

Furthermore, a method of generating a sufficiently large quantity of heat energy for a practical application with a good controllability against less input electrical energy is provided.

## Claims

1. A hydrogen storage apparatus comprising:
a chamber (22) containing a hydrogen gas;
a pair of spaced electrodes (23) arranged for generating a discharge in said hydrogen gas;
means (21) of applying voltage to said pair of spaced electrodes (23) to generate said discharge; and
a hydrogen storage member (24) provided in said chamber (22) opposite to said pair of electrodes (23).

2. Apparatus according to claim 1 including means (36) of applying a negative voltage to said hydrogen storage member (24).

3. Apparatus according to either preceding claim wherein the hydrogen storage member (24) has been subjected to at least one of surface-absorbed material removing treatment and surface damage treatment.

4. The apparatus according to any preceding claim, wherein either the entirety or the surface of the hydrogen storage member (24) is formed of a hydrogen storage material having a powdery form.

5. A method of storing hydrogen comprising introducing hydrogen gas into a chamber (22), applying a voltage to a pair of electrodes (23) provided in the chamber (22) to generate discharge between the pair of electrodes (23), thereby storing hydrogen in a hydrogen storage member (24) provided opposite to the pair of electrodes (23).

6. The method according to claim 5, wherein a minus voltage is applied to the hydrogen storage member (24).

7. The method according to either claim 5 or 6, wherein the hydrogen storage member (24) is subjected to at least one of surface-absorbed material removing treatment and surface damaging treatment.

8. The method according to any of claims 5 to 7, wherein either the entirety or the surface of the hydrogen storage member (24) is formed of a hydrogen storage material having a powdery form.

9. The method according to any preceding claim 5 to 8 wherein deuterium gas or a gas mixture predominantly of deuterium gas is introduced, as said hydrogen gas, into said chamber (22), and the hydrogen isotope deuterium is stored in said storage member (24).

10. A method of generating heat, which method comprises the method of storing the hydrogen isotope deuterium as claimed in claim 9 wherein a minus voltage is applied to the storage member (24) and this voltage is changed cyclically between low voltage and high voltage minus voltages.

11. The method according to claim 10 wherein the low voltage and high voltage voltages are -5v and -500v and the cycle period is 5 minutes.

12. The method according to either of the preceding claims wherein the cycle period is changed.

## Patentansprüche

1. Wasserstoffspeichergerät, umfassend:
eine Kammer (22), welche ein Wasserstoffgas enthält;
ein Paar voneinander getrennter Elektroden (23), die zur Erzeugung einer Entladung in dem Wasserstoffgas angeordnet sind;
eine Einrichtung (21) zur Anlegung von Spannung an das Paar voneinander getrennter Elektroden (23) zur Erzeugung der Entladung; und
ein Wasserstoffspeicherelement (24), das in der Kammer (22) dem Paar Elektroden (23) gegenüberliegend bereitgestellt ist.

2. Gerät nach Anspruch 1, welches die Einrichtung (36) zur Anlegung einer negativen Spannung an das Wasserstoffspeicherelement (24) einschließt.

3. Gerät nach einem der vorhergehenden Ansprüche, wobei das Wasserstoffspeicherelement (24) mindestens einer Behandlung zur Entfernung von auf der Oberfläche adsorbiertem Material sowie einer Oberflächenbeschädigungsbehandlung unterzogen wurde.

4. Gerät nach einem der vorhergehenden Ansprüche, wobei entweder die Gesamtheit oder die Oberfläche des Wasserstoffspeicherelements (24) aus einem Wasserstoffspeichermaterial gebildet ist, welches eine pulverige Form hat.

5. Verfahren zur Speicherung von Wasserstoff, umfassend die Einleitung von Wasserstoffgas in eine Kammer (22), das Anlegen einer Spannung an ein Paar von in der Kammer (22) bereitgestellten Elektroden (23), um eine Entladung zwischen dem Paar von Elektroden (23) zu erzeugen, wodurch Wasserstoff in einem Wasserstoffspeicherelement (24), das gegenüberliegend dem Paar von Elektroden (23) bereitgestellt ist, gespeichert wird.

6. Verfahren nach Anspruch 5, wobei eine negative Spannung an das Wasserstoffspeicherelement (24) angelegt wird.

7. Verfahren nach einem der Ansprüche 5 oder 6, wobei das Wasserstoffspeicherelement (24) mindestens einer Behandlung zur Entfernung von auf der Oberfläche adsorbiertem Material sowie einer Oberflächenbeschädigungsbehandlung unterzogen wurde.

8. Verfahren nach einem der Ansprüche 5 bis 7, wobei entweder die Gesamtheit oder die Oberfläche des Wasserstoffspeicherelements (24) aus einem Wasserstoffspeichermaterial gebildet ist, das eine pulverige Form hat.

9. Verfahren nach einem der Ansprüche 5 bis 8, wobei Deuteriumgas oder ein vornehmlich aus Deuteriumgas bestehendes Gasgemisch als Wasserstoffgas in die Kammer (22) eingeleitet und das Wasserstoffisotop Deuterium im Wasserstoffspeicherelement (24) gespeichert wird.

10. Verfahren zur Wärmeerzeugung, welches das Verfahren zur Speicherung des Wasserstoffisotops Deuterium nach Anspruch 9 umfaßt, wobei eine negative Spannung an das Speicherelement (24) angelegt und diese Spannung cyclisch zwischen einer niedrigen negativen Spannung und einer hohen negativen Spannung geändert wird.

11. Verfahren nach Anspruch 10, wobei die niedrige Spannung und die hohe Spannnung -5 V und -500 V betragen und die Cyclusperiode 5 Minuten beträgt.

12. Verfahren nach einem der vorhergehenden Ansprüche, wobei die Cyclusperiode verändert wird.

## Revendications

1. Appareil de stockage d'hydrogène, comprenant :
une chambre (22) contenant de l'hydrogène gazeux ;
une paire d'électrodes espacées (23) disposées de manière à engendrer une décharge dans cet hydrogène gazeux ;
un moyen (21) d'application d'une tension à ladite paire d'électrodes espacées (23) pour engendrer ladite décharge ; et
un élément de stockage d'hydrogène (24) installé dans ladite chambre (22) à l'opposé de ladite paire d'électrodes (23).

2. Appareil suivant la revendication 1, comprenant un moyen (36) d'application d'une tension négative à l'élément de stockage d'hydrogène (24).

3. Appareil suivant l'une des revendications précédentes, dans lequel l'élément de stockage d'hydrogène (24) a été soumis à au moins un des traitements consistant en un traitement d'élimination de matière absorbée en surface et un traitement d'altération de surface.

4. Appareil suivant l'une quelconque des revendications précédentes, dans lequel l'intégralité ou bien la surface de l'élément de stockage d'hydrogène (24) est formée d'une matière de stockage d'hydrogène sous forme de poudre.

5. Procédé de stockage d'hydrogène, comprenant l'introduction d'hydrogène gazeux dans une chambre (22), l'application d'une tension à une paire d'électrodes placées dans la chambre (22) pour engendrer une décharge entre ces deux électrodes (23), ce qui permet de stocker l'hydrogène dans un élément de stockage d'hydrogène (24) installé à l'opposé de la paire d'électrodes (23).

6. Procédé suivant la revendication 5, dans lequel une tension négative est appliquée à l'élément de stockage d'hydrogène (24).

7. Procédé suivant la revendication 5 ou 6, dans lequel l'élément de stockage d'hydrogène (24) est soumis à au moins un des traitements consistant en un traitement d'élimination de matière absorbée en surface et un traitement d'altération de surface.

8. Procédé suivant l'une quelconque des revendications 5 à 7, dans lequel l'intégralité ou bien la surface de l'élément de stockage d'hydrogène (24) est formée d'une matière de stockage d'hydrogène, sous forme de poudre.

9. Procédé suivant l'une quelconque des revendications 5 à 8 précédentes, dans lequel du deutérium gazeux ou un mélange gazeux constitué de manière prédominante de deutérium gazeux est introduit, en tant qu'hydrogène gazeux, dans la chambre (22), et l'isotope d'hydrogène consistant en deutérium est stocké dans l'élément de stockage (24).

10. Procédé pour engendrer de la chaleur, procédé qui comprend le procédé de stockage de l'isotope d'hydrogène consistant en deutérium suivant la revendication 9, dans lequel une tension négative est appliquée à l'élément de stockage (24) et cette tension est modifiée de manière cyclique entre une tension négative faible et une tension négative forte.

11. Procédé suivant la revendication 10, dans lequel la tension faible et la tension forte sont égales à -5V et -500V et le temps de cycle est égal à 5 minutes.

12. Procédé suivant l'une des revendications précédentes, dans lequel le temps de cycle subit une variation.
